(19) **Europäisches Patentamt**

**European Patent Office**

**Office européen des brevets**

(11) **EP 1 024 608 A2**

(12) **EUROPEAN PATENT APPLICATION**

(43) Date of publication:
02.08.2000 Bulletin 2000/31

(51) Int. Cl.⁷: **H04B 7/08**

(21) Application number: **00400058.4**

(22) Date of filing: **12.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.01.1999 ES 9900152**

(71) Applicant: **ALCATEL**
**75008 Paris (FR)**

(72) Inventor:
**Fernandez Duran, Alfonso**
**28229 Villanueva del Pardillo, Madrid (ES)**

(74) Representative:
**Lamoureux, Bernard et al**
**Alcatel Espana, S.A,**
**Patent department,**
**Ramirez de Prado, 5**
**28045 Madrid (ES)**

(54) **Method for diversity reception of a cdma signal and corresponding transmitter**

(57) The present invention provides a method for diversity reception by a second remote unit of a signal transmitted by a first unit in a code division multiple access system. The method is characterised by the pre-distortion (11) in said first unit of said signal prior to its transmission, said predistortion applying to the signal an effect appreciably opposite to the effect produced by the transmission channel.

**FIG 3**

EP 1 024 608 A2

## Description

### OBJECT OF THE PRESENT INVENTION

The present invention refers to a code division multiple access (CDMA) system with diversity reception. More specifically, the invention proposes a method for diversity reception of a CDMA signal as well as a transmission unit for sending a CDMA signal from said first unit to a second unit in a code division multiple access telecommunications system.

### STATE OF THE ART

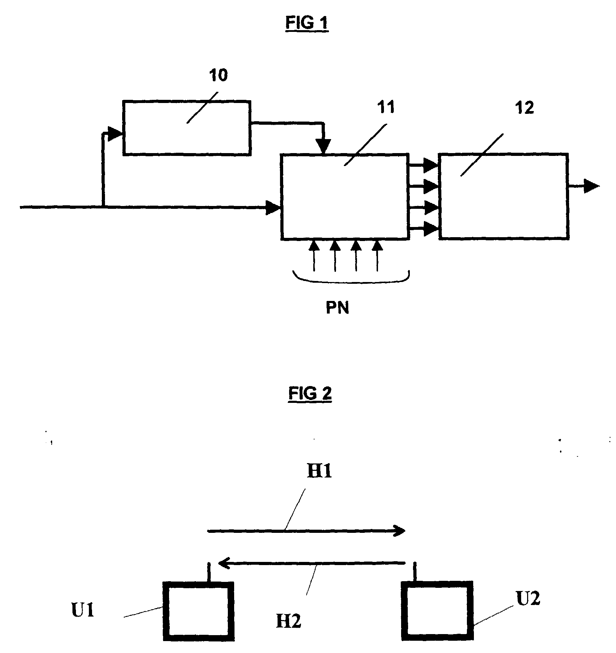

With reference to figure 1, according to the state of the art a CDMA diversity receiver, of the type described for example in the patent US-A-5109390, incorporated in the present patent application by reference, typically comprises an acquisition circuit **10**, a despreader circuit **11** and a combiner circuit **12**. The acquisition circuit **10** typically comprises a correlator circuit that correlates the received signal with different PN sequences. These different PN sequences correspond to a single PN signal with different phases, respectively. When a correlation peak is detected at the output of the correlator circuit, the corresponding phase of the CDMA code is forwarded to the despreader circuit **11**. The despreader circuit **11** multiplies the signal received with each of N PN codes with respective phases, said N PN codes being those which produce correlation peaks. The N outputs of the despreader circuit **11** are applied to the combiner circuit **12**, which adds the N signals produced by the despreader circuit **11**. Thus the N signals received in diversity reception are combined.

In a radiocommunications network with terminals, according to the state of the art described above, it is necessary for each terminal to employ a circuit assembly of the type described with reference to figure 1, basically multiplying the number of processing operations by N, N being the number of diversity signals it is wished to add to improve the quality of the received signal.

The present invention proposes the division of this number of operations by N, providing a method and a device for diversity reception of a CDMA signal. The invention is particularly applicable in a limited mobility environment in which the diversity paths of a single signal change at slow speed. Another object of the present invention is to provide a solution within the framework of a radiocommunications system which works in frequency duplex mode, whereby two respective different frequencies are used for transmitting data from a terminal to a base station and for transmitting data from the base station to the terminal.

### CHARACTERISATION OF THE INVENTION

Consequently, a method for diversity reception by a second unit of a CDMA signal transmitted by a first unit in a code division multiple access system, is characterised by the predistortion applied in the first unit to said signal prior to its transmission, the predistortion applied to the signal having an effect appreciably opposite to the effect produced by a first channel over which the first unit sends data to said second unit.

According to an implementation, the first unit sends data to the second unit over the first channel and the second unit sends data to said first unit over a second channel, the method comprising the steps of:

- calculating, in the first unit, coefficients that represent the second channel from a second predetermined sequence sent from the second unit to the first unit;
- sending by the first unit of a first predetermined sequence to the second unit, which forwards it in the form received to the first unit, in the form of a backward sequence;
- calculating, in said first unit, coefficients that represent the first and second channels together, from the received backward sequence; and
- predistorting the signal sent by the first unit by inverse transfer function coefficients of the first channel which are calculated in terms of said coefficients that represent the second channel and said coefficients that represent the first and second channels together.

Typically, the coefficients that represent the second channel are the inverse transfer function coefficients of the second channel and the coefficients that represent the first and second channels together are the direct transfer function coefficients of the first and second channels together, said predistortion being performed with the inverse coefficients of the convolution of the inverse transfer function coefficients of the second channel and of the direct transfer function coefficients of the first and second channels together. Alternatively, the coefficients that represent the second channel are the direct transfer function coefficients of the second channel and the coefficients that represent the first and second channels together are the inverse transfer function coefficients of the first and second channels together, said predistortion being performed with the inverse coefficients of the convolution of the direct transfer function coefficients of the second channel and of the inverse transfer function coefficients of the first and second channels together.

According to another implementation, the first unit sends data to said second unit over the first channel and said second unit sends data to said first unit over a second channel, the method comprising the steps of:

- calculating, in the first unit, coefficients that represent the second channel from a second predetermined sequence sent from the second unit to the first unit;

- sending by the first unit to the second unit of a first sequence, which is the result of the convolution of a predetermined sequence and of said coefficients that represent the second channel, said first sequence being forwarded exactly as it is received by the second unit to the first unit in the form of a backward sequence;
- calculating, in said first unit, inverse transfer function coefficients of the first channel from said backward sequence; and
- predistorting the signal sent by the first unit in terms of said inverse transfer function coefficients of the first channel.

According to a first alternative, the coefficients that represent the second channel are the inverse transfer function coefficients of the second channel and the coefficients that represent the first channel are the inverse coefficients of the convolution of said backward sequence received by the first unit and of a predetermined inverse sequence.

The present invention also provides a unit of a telecommunications system for transmitting a signal to a remote unit over a first channel. The unit comprises a circuit for multiplying the signal to be sent by a CDMA code that is in the form of a CDMA code sequence, and is characterised in that it comprises a predistorter circuit, for predistorting said signal to be sent by applying to said signal an effect appreciably opposite to the effect produced by the transmission channel.

The unit can comprise:

- means for calculating the coefficients that represent the second channel from a second predetermined sequence sent from the remote unit to the unit;
- means for sending a first predetermined sequence to the remote unit, which forwards it in the form received to said unit, in the form of a backward sequence;
- means for calculating the coefficients that represent the first and second channels together, from the backward sequence received;
  and is characterised in that:
- said means for predistorting, predistort the transmitted signal by the inverse transfer function coefficients of the first channel, which are calculated in terms of said coefficients that represent the second channel and said coefficients that represent the first and second channels together.

## BRIEF DESCRIPTION OF THE FIGURES

A more detailed explanation of the present invention is provided in the following description, based on the figures attached, in which:

- figure 1, already described, is a block diagram of a diversity receiver according to the state of the art;
- figure 2 shows a block diagram of two units according to the present invention;
- figure 3 shows a block diagram of a first unit of figure 2;
- figure 4 shows a block diagram of a second unit of figure 2;
- figure 5 is a block diagram of a predistorter circuit, included in the first unit of figure 2;
- figure 6 is a block diagram of a predistortion coefficient generator included in the first unit of figure 2;
- figure 7 shows a predistortion algorithm of a signal transmitted by the first unit according to a first implementation of the invention; and
- figure 8 shows a predistortion algorithm of a signal transmitted by the first unit according to a second implementation of the invention.

## DESCRIPTION OF THE INVENTION

Figure 2 shows two units U1 and U2 of a CDMA telecommunications system exchanging data over two channels H1 and H2, respectively. By way of example, the invention is described in the present application within the frame of a radiocommunications system for the subscriber local loop although said invention can be applied in all types of application employing diversity reception. The two radio channels H1 and H2 are defined by two frequencies equal to each other in a Time Division Duplex (TDD) application, or different from each other in a Frequency Division Duplex (FDD) application. The invention is applicable in these two implementations but the following description refers to a preferred embodiment within the framework of a Frequency Division Duplex (FDD) application.

The first unit U1 comprises, in the transmission direction, a baseband CDMA modulator 10, a predistorter circuit 11, an uplink converter 12, a transmission amplifier 13 and a duplexer 14. Various embodiments of a CDMA modulator 10 are known from the state of the art and this circuit 10 is not described in detail in the present application. In the reception direction, the first unit U1 comprises said duplexer 14, a reception amplifier 20, a downlink converter 21, a baseband CDMA demodulator 22 and a generator of predistortion coefficients 23. Various embodiments of a CDMA demodulator 22 are known from the state of the art and this circuit 22 is not described in detail. In the book "CDMA - Principles of Spread Spectrum Communication" by Andrew J. VITERBI, published by Addison-Wesley Publishing Company, a CDMA system is described and on page 5, figure 1.2 shows a schematic representation of a baseband CDMA modulator 10 and its associated uplink converter 12 as well as a downlink converter 21 and its associated baseband demodulator 22.

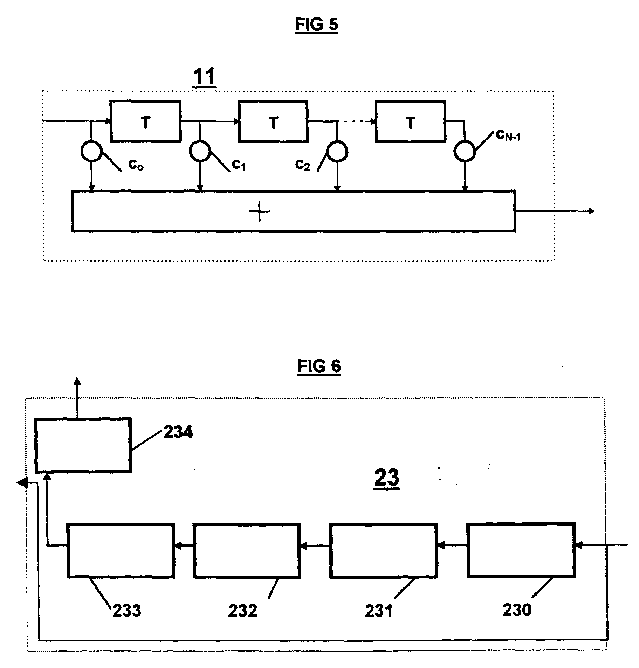

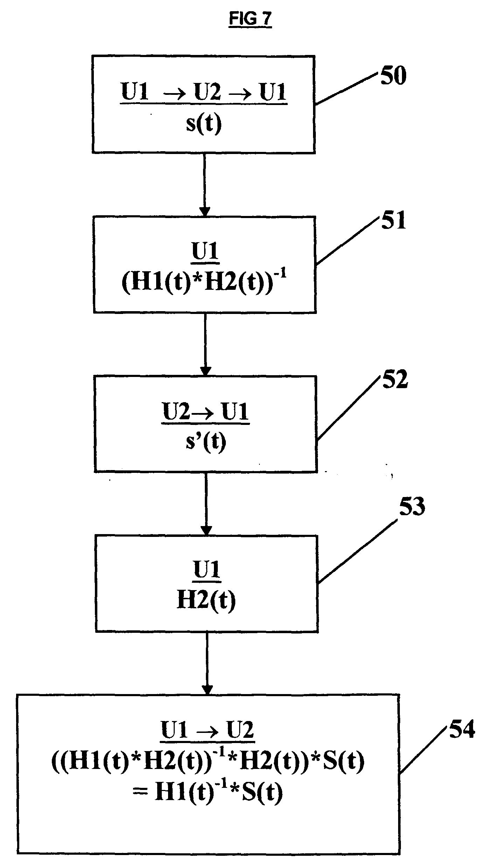

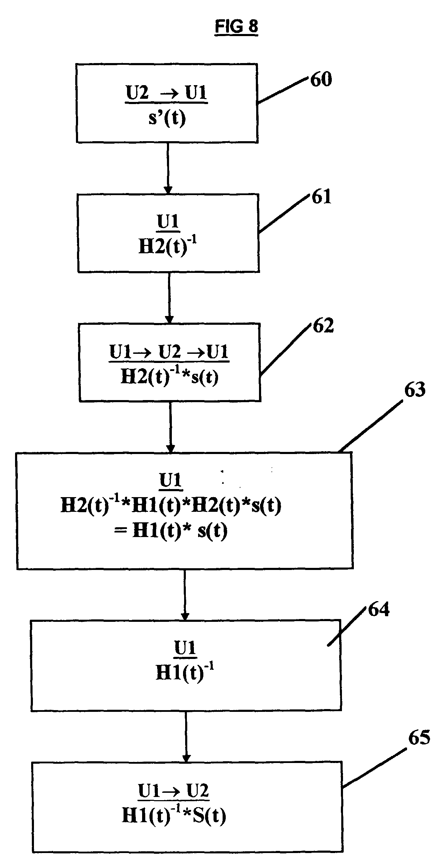

Figure 5 shows a predistorter circuit 11 of length N according to an embodiment of the present invention. This predistorter circuit has the configuration of a conventional linear equaliser, but any other type of predistorter circuit can be employed according to the invention. The predistorter circuit **11** comprises taps, spaced at time intervals of T/2, where T is the minimum separation between two successive symbols of the CDMA code, for example PN. The signal x(n) produced by the modulator **10** is applied to an input of the predistorter circuit which delays said signal through T/2 delay lines connected in cascade. The output of the first delay line is x(n-1), the output of the second delay line is x(n-2), the output of the third delay line is x(n-3), and so on repeatedly such that the output of the final delay line is x( n-N+1 ). There is a total of (N-1) delay lines and N predistortion coefficients. The N predistortion coefficients **c0, c1, c2, ..., cN-1** are complex numbers. Multiplier circuits multiply the signal x(n) and the different delayed signals x(n-1), x(n-2), x(n-3), ..., x( n-N+1 ) by the predistortion coefficients **c0, c1, c2, ..., cN-1**, respectively. An adder circuit totals the resulting multiplied signals in order to produce the predistorted signal which is applied to an input of the uplink converter **12**. In practice, the predistortion coefficients **c0, c1, c2, ..., cN-1** change periodically according to the algorithms of figures 7 and 8 to adapt to the characteristics of the channel **H1**.

The generator of predistortion coefficients **23** shown in figure 6 comprises a translator **230**, a frequency response generator **231**, an inverse translator **232**, a distributing circuit of predistortion coefficients **234** and, alternatively, a selector of coefficients **233**. The output of the distributing circuit of predistortion coefficients **234** applies the appropriate predistortion coefficients **c0, c1, c2, ..., cN-1** to the predistorter circuit **11**. The generator of predistortion coefficients **23** may employ a processor, a microprocessor or another signal processing device.

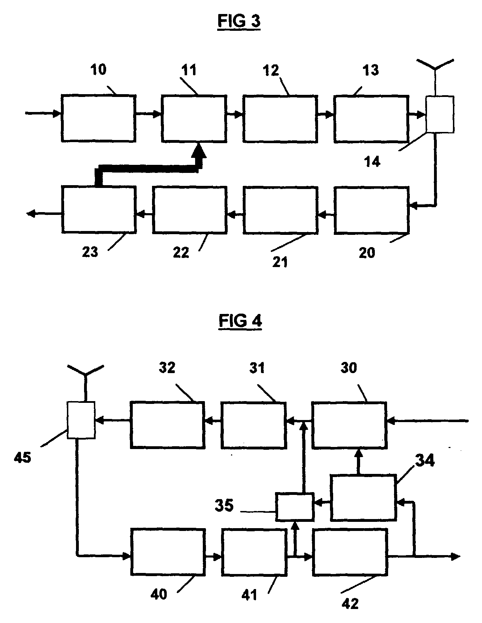

A training signal, or sequence, received from the output of demodulator **22** (Figure 3) and sampled by a sampler circuit (not shown) is applied to an input of the generator of predistortion coefficients **23**. The sampled signal is received by the translator **230** that converts the time domain signal received into an equivalent signal in the frequency domain. For example, a DFT (Discrete Fourier Transform) circuit is employed for implementing the function of translator **230**. The resulting signal is applied to an input of the frequency response generator, or channel inverter **231**, which applies the following existing linear relationships for generating the inverse transfer function coefficients: a received training signal divided by a training signal as it is really, is the direct transfer function of the channel; and the inverse of this transfer function corresponds to the division of the training signal as it really is by the received training signal.

In the present description, the term "inverse transfer function coefficients" refers to coefficients that, in the time domain, when subjected to convolution with the direct transfer function coefficients (i.e. the coefficients that define the channel) give as a result the Dirac pulse, and, in the frequency domain, when multiplied by the direct transfer function coefficients, give as a result the Fourier transform of this pulse. In other words, these inverse transfer function coefficients are the coefficients of the inverse channel.

The training signal received by unit **U1** is normally different from the training signal initially transmitted, and corresponds to a distorted version of said transmitted signal. The training signal as it really is, is stored locally in the frequency response generator **231**.

The inverse translator **232** generates a time domain pulse response sequence {y(0), y(1), y(2), ..., y(M-1)} of the inverse channel. This time domain pulse response represents the inverse transfer function characteristics of a channel in the time domain, and defines a finite pulse response characteristic of said channel. In theory, if the finite pulse response sequence and the channel are placed in cascade, the overall pulse frequency response is equivalent to a band-pass filter with a pass-band equal to the pass-band of the channel.

The pulse response sequence {y(0), y(1), y(2), ..., y(M-1)} defines predistortion coefficients employed by the distributing circuit of predistortion coefficients **234** to supply the coefficients of the predistorter circuit of figure 5, as is described below with reference to figures 7 and 8. In this case M is equal to N.

Alternatively, the predistorter circuit **11** can use fewer coefficients (N coefficients) than the M coefficients {y(0), y(1), y(2),....., y(M-1)} produced by the inverse translator **232**. Consequently, the selector **233** selects, for example, the coefficients associated with a power peak in the received signal. These selected coefficients are applied to the distributing circuit of predistortion coefficients **234** for defining the predistortion coefficients for the signal to be transmitted by unit **U1**. An embodiment of a generator of predistortion coefficients **23** is described in the document US-A-5636244 starting in line 14 of column 5, incorporated in the present patent application by reference.

With reference to figure 7, an algorithm is now described for implementing a method according to a first alternative of the present invention. This algorithm is implemented partly in the distributing circuit of coefficients **234** of the first unit **U1** and partly in the second unit, or remote unit, **U2**.

Figure 7 shows a first alternative of the present invention. According to the STAGE **50**, the first unit **U1** sends a first predetermined sequence, or training sequence, **s(t)**, to the second unit **U2** that forwards it exactly as received to the first unit **U1**, in the form of a backward sequence. With reference to figure 4, the second unit **U2** comprises, in the transmission direction, a baseband CDMA modulator **30**, an uplink converter **31**, a transmission amplifier **32** and a duplexer **45**. In the reception direction, this second unit **U2** comprises the duplexer **45**, a reception amplifier **40**, a downlink converter **41** and a baseband CDMA demodulator **42**. According to an advantage of the present invention, the baseband CDMA demodulator **42** comprises, in cascade, a correlating device and a despreader circuit **11**, and does not include a combiner circuit **12** and an acquisition circuit **10** as complex as that of figure 1. Moreover, the second unit **U2** comprises a synchronisation circuit **34**, the input of which is connected to an output of the demodulator **42** as well as to a switch element **35** controlled by the synchronisation circuit **34**. The switch element **35** is connected between an output of the downlink converter **41** and an input of the uplink converter **32**. For the second unit **U2** to forward the received sequence **s(t)** exactly as received to the first unit **U1**, the synchronisation circuit **34** detects the position in time of said sequence **s(t)**, and controls the switch element **35** in such a manner that while said sequence is present, the output of the downlink converter **41** is connected to an input of the uplink converter **31**. At the same time, the synchronisation circuit **34** blocks the output of modulator **30**. Thus, the sequence **s(t)** sent by the first unit **U1** is forwarded exactly as received by the second unit **U2** to the first unit **U1**.

The first unit **U1** receives the backward signal H1*H2*s(t) , H1 being the transfer function of the associated channel **H1** and H2 being the transfer function of the associated channel **H2**. To simplify the reference symbols in the present description, the terms **H1** and **H2** are used to designate channels, transfer functions or coefficients associated with these functions. According to STAGE **51**, the first unit **U1** calculates coefficients that represent the first and second channels together from the backward signal received.

According to STAGE **53**, the first unit **U1** also calculates coefficients that represent the second channel **H2** from a second predetermined sequence, or training sequence, **s'(t)** (which can be equal to sequence **s(t)**), sent (STAGE **52**) from the second unit **U2** to the first unit **U1**. According to STAGE **54**, in terms of these coefficients that represent the second channel **H2** and of the coefficients that represent the first and second channels **H1** and **H2**, the first unit **U1** predistorts the signal sent to the second unit **U2** with the inverse transfer function coefficients $H1^{-1}$ of the first channel.

According to a first subalternative of this first alternative, the coefficients that represent the second channel are the inverse transfer function coefficients $H2^{-1}$ of the second channel, and the coefficients that represent the first and second channels together are the direct transfer function coefficients **H1*H2** of the first and second channels together. In this case, the predistortion of signal **S(t)** sent by **U1** is implemented with the inverse coefficients $H1^{-1}$ of the convolution of the inverse transfer function coefficients of the second channel $H2^{-1}$ and of the direct transfer function coefficients of the first and second channels **H1*H2** together. The generator of predistortion coefficients **23** produces inverse transfer function coefficients in terms of the received signal and of a predetermined sequence (for training) stored locally. To produce direct transfer function coefficients from the inverse transfer function coefficients received from the generator **23**, the distributing circuit of coefficients **234** comprises a circuit for obtaining inverse coefficients of a type known in the state of the art.

According to a second subalternative of the first alternative shown in detail in figure 7, the coefficients that represent the second channel **H2** are the direct transfer function coefficients of the second channel, and the coefficients that represent the first and second channels together are the inverse transfer function coefficients $(H1*H2)^{-1}$ of the first and second channels together. In this case, the predistortion is achieved with the coefficients $H1^{-1}$ from the convolution of the direct transfer function coefficients of the second channel and of the inverse transfer function coefficients of the first and second channels together. As was already mentioned above, the generator of predistortion coefficients **23** produces the inverse transfer function coefficients in terms of the received signal and of a predetermined sequence stored locally. To produce the direct transfer function coefficients from the inverse transfer function coefficients received from the generator **23**, the distributing circuit of coefficients **234** comprises a circuit for obtaining inverse coefficients of a type known in the state of the art.

For this first alternative, in the first unit **U1**, the set of circuits **23** calculates the coefficients that represent the second channel **H2** or $H2^{-1}$ from the predetermined sequence **s'(t)** sent from the remote unit **U2**. In the transmission direction, the first unit **U1** transmits the first predetermined sequence **s(t)** to the remote unit **U2**, which forwards it exactly as received to the unit **U1** as has been indicated with reference to figure 4. The set of circuits **23** calculates the coefficients **H1*H2** or $(H1*H2)^{-1}$ that represent the first and second channels together from the backward sequence received. The predistorter circuit **11** predistorts the signal sent **S(t)** with the inverse transfer function coefficients $H1^{-1}$ of the first channel, which are calculated in terms of the coefficients that represent the second channel and of the coefficients that represent the first and second channels together.

In the first subalternative, the set of circuits calculates the inverse transfer function coefficients $H2^{-1}$ of the second channel and calculates the direct transfer function coefficients **H1*H2** of the first and second channels together. In this case, the predistorter circuit **11** predistorts the signal to be sent with the inverse coefficients $H1^{-1}$ of the convolution of the inverse transfer function coefficients of the second channel $H2^{-1}$ and of the direct transfer function coefficients of the first and second channels **H1*H2** together. These inverse coefficients $H1^{-1}$ of the convolution of the inverse transfer function coefficients of the second channel $H2^{-1}$ and of the direct transfer function coefficients of the first and second channels **H1*H2** together are calculated in the distributing circuit of coefficients **234**.

In the second subalternative, the set of circuits **23** calculates the direct transfer function coefficients **H2** of the second channel and calculates the inverse transfer function coefficients **(H1*H2)**$^{-1}$ of the first and second channels together. In this case, the predistorter circuit **11** predistorts the signal to be sent with the coefficients **H1**$^{-1}$ from the convolution of the direct transfer function coefficients of the second channel and of the direct transfer function coefficients of the first and second channels togeher.

The figure 8 shows a second alternative of the present invention.

According to this second alternative, the first unit **U1** calculates the coefficients **H2**$^{-1}$ that represent the second channel (STAGE **61**) from a second sequence, typically a training sequence, **s'(t)**, sent from the second unit **U2** (STAGE **60**).

Also, the first unit **U1** sends to the second unit **U2** (STAGE **62**) a first sequence **H2**$^{-1}$*s(t)$, which is the result of the convolution of a predetermined sequence **s(t)** and said coefficients **H2**$^{-1}$ that represent the second channel, said first sequence being forwarded as received by the second unit **U2** to the first unit **U1** in the form of a backward sequence. The first unit **U1** receives the signal

$$H2^{-1}*s(t)*H1*H2 = H1*s(t).$$

The first unit **U1** calculates the coefficients **H1**$^{-1}$ that represent the first channel from the backward sequence, and predistorts the signal sent to the second unit **U2** in terms of said coefficients that represent the first channel. The coefficients that represent the second channel are the inverse transfer function coefficients **H2**$^{-1}$ of the second channel and the coefficients **H1**$^{-1}$ that represent the first channel are the inverse coefficients of the convolution of said backward sequence

$$H2^{-1}*H2*H1*s(t)$$

received by the first unit **U1** and of an inverted predetermined sequence **s**$^{-1}$**(t)**.

According to this second alternative, in the unit **U1**, the set of circuits **23** calculates the inverse transfer function coefficients **H2**$^{-1}$ of the second channel from the second sequence **s'(t)** sent from the second unit **U2** to the first unit **U1**. In the transmission direction this first unit **U1** transmits to the second unit **U2** a first sequence **H2**$^{-1}$*s(t)$, which is the result of the convolution of a predetermined sequence **s(t)** and the inverse transfer function coefficients **H2**$^{-1}$ of the second channel, said first convoluted sequence being forwarded exactly as received by the second unit **U2** to the first unit **U1** in the form of a backward sequence

$$H2^{-1}*H1*H2*s(t).$$

The set of circuits **23** calculates the inverse transfer function coefficients of the first channel **H1**$^{-1}$ from this backward sequence.

In practice, the predistortion coefficients are periodically updated with any of the algorithms of figures 7 and 8, which are applied repeatedly.

Moreover, although the terms "predetermined sequence" or "training sequence" are employed in the present description, these terms cover any signal that permits the inverse transfer function coefficients **H1**$^{-1}$ of the first channel to be determined, by using, for example, a blind equalization procedure to determine the coefficients that represent the channels **H1**, **H1*H2**, etc.

**Claims**

1. **METHOD FOR DIVERSITY RECEPTION** by a second unit (**U2**) of a CDMA signal sent by a first unit (**U1**) in a code division multiple access system, <u>**characterised**</u> by the predistortion (**11**) in said first unit (**U1**) of said signal prior to its transmission, said predistortion applying to the signal an effect appreciably opposite to the effect produced by a first channel (**H1**) over which said first unit (**U1**) sends data to said second unit (**U2**).

2. **METHOD** according to claim 1, <u>**characterised**</u> in that said first unit (**U1**) sends data to said second unit (**U2**) over the first channel (**H1**) and said second unit (**U2**) sends data to said first unit (**U1**) over a second channel (**H2**), said method comprising the steps of:

   - calculating, in the first unit, coefficients that represent the second channel (**H2**) from a second predetermined sequence (**s'(t)**) sent from the second unit (**U2**) to the first unit (**U1**);
   - sending by the first unit (**U1**) of a first predetermined sequence (**s(t)**) to the second unit (**U2**), which forwards it exactly as received to the first unit (**U1**), in the form of a backward sequence;
   - calculating, in said first unit (**U1**), coefficients that represent the first and second channels together (**H1*H2; (H1*H2)**$^{-1}$), from the received backward sequence

$$(H1*H2*s(t));$$

   and
   - predistorting the signal sent by the first unit by inverse transfer function coefficients (**H1**$^{-1}$) of

the first channel, which are calculated in terms of said coefficients that represent the second channel (**H2**, **H2**$^{-1}$) and said coefficients that represent the first and second channels together (**H1*H2**, **(H1*H2)**$^{-1}$).

3. **METHOD** according to claim 2, **characterised** in that said coefficients that represent the second channel are the inverse transfer function coefficients (**H2**$^{-1}$) of the second channel and said coefficients that represent the first and second channels together are the direct transfer function coefficients (**H1*H2**) of the first and second channels together, said predistortion being performed with the inverse coefficients (**H1**$^{-1}$) of the convolution of the inverse transfer function coefficients of the second channel (**H2**$^{-1}$) and of the direct transfer function coefficients of the first and second channels together (**H1*H2**).

4. **METHOD** according to claim 2, **characterised** in that said coefficients that represent the second channel (**H2**) are the direct transfer function coefficients (**H2**) of the second channel and said coefficients that represent the first and second channels together are the inverse transfer function coefficients ((**H1*H2**)$^{-1}$) of the first and second channels together, said predistortion being performed with the inverse coefficients (**H1**$^{-1}$) of the convolution of the direct transfer function coefficients of the second channel and of the inverse transfer function coefficients of the first and second channels together.

5. **METHOD** according to claim 1, **characterised** in that said first unit (**U1**) sends data to said second unit (**U2**) over the first channel (**H1**) and said second unit (**U2**) sends data to said first unit (**U1**) over a second channel (**H2**), said method comprising the steps of:

   - calculating, in the first unit, coefficients that represent the second channel (**H2**, **H2**$^{-1}$) from a second predetermined sequence (**s'(t)**) sent from the second unit (**U2**) to the first unit (**U1**);
   - sending by the first unit (**U1**) to the second unit (**U2**) of a first sequence (**H2**$^{-1}$**\*s(t)**), which is the result of the convolution of a predetermined sequence (**s(t)**) and of said coefficients (**H2**$^{-1}$) that represent the second channel, said first sequence being forwarded exactly as it is received by the second unit to the first unit (**U1**) in the form of a backward sequence

$$(\mathbf{H1*H2*H2^{-1}*s(t)});$$

   - calculating, in said first unit (**U1**), the inverse transfer function coefficients of the first channel (**H1**$^{-1}$) from said backward sequence; and
   - predistorting the signal sent by the first unit (**U1**) in terms of said inverse transfer function coefficients of the first channel.

6. **METHOD** according to claim 5, **characterised** in that said coefficients that represent the second channel are the inverse transfer function coefficients (**H2**$^{-1}$) of the second channel (**U2**) and said coefficients (**H1**$^{-1}$) that represent the first channel (**U1**) are the inverse coefficients of the convolution of said backward sequence

$$(\mathbf{H1*H2*H2^{-1}*s(t)})$$

received by the first unit (**U1**) and of a predetermined inverse sequence (**s**$^{-1}$**(t)**).

7. **UNIT** (**U1**) of a telecommunications system for sending a signal to a remote unit (**U2**) over a first channel (**H1**), comprising means (**10**) for multiplying the signal to be sent by a CDMA code that is in the form of a CDMA code sequence, **characterised** in that it comprises a predistorter circuit (**11**) for predistorting said signal to be sent by applying to said signal an effect appreciably opposite to the effect produced by the transmission channel.

8. **UNIT** according to claim 7, **characterised** in that it comprises:

   - means (**53**) for calculating the coefficients that represent the second channel (**H2**) from a second predetermined sequence (**s'(t)**) sent (**52**) from the remote unit (**U2**) to the unit (**U1**);
   - means (**50**) for sending a first predetermined sequence (**s(t)**) to the remote unit (**U2**) that forwards it exactly as received to said unit (**U1**), in the form of a backward sequence; and
   - means (**51**) for calculating the coefficients that represent the first and second channels together (**H1*H2**), from the backward sequence received (**s(t)**);
   and in that said means for predistorting (11), predistort the signal sent (**S(t)**) by the inverse transfer function coefficients of the first channel, which are calculated in terms of said coefficients that represent the second channel (**H2**, **H2**$^{-1}$) and said coefficients that represent the first and second channels together (**{H1*H2}**$^{-1}$, **{H1*H2}**).

9. **REMOTE UNIT** for forwarding to unit (**U1**) according to claim 8, exactly as received, said first predetermined sequence (**s(t)**), in the form of a backward sequence, **characterised** in that it comprises:

- means for connecting, in a manner synchronised with an incoming predetermined sequence (**s(t)**), an output of a downlink converter with an input of an uplink converter.

10. **UNIT** according to claim 8, <u>**characterised**</u> in that the means (**53**) for calculating the coefficients that represent the second channel (**H2**) calculate the inverse transfer function coefficients ($\textbf{H2}^{-1}$) of the second channel; the means (**51**) for calculating the coefficients that represent the first and second channels together (**H1\*H2**) calculate the direct transfer function coefficients (**H1\*H2**) of the first and second channels together; and the means for predistorting (**11**), predistort the signal to be sent with the inverse coefficients ($\textbf{H1}^{-1}$) of the convolution of the inverse transfer function coefficients of the second channel ($\textbf{H2}^{-1}$) and of the direct transfer function coefficients of the first and second channels together (**H1\*H2**).

11. **UNIT** according to claim 8, <u>**characterised**</u> in that the means (**53**) for calculating the coefficients that represent the second channel (**H2**) calculate the direct transfer function coefficients (**H2**) of the second channel; the means (**51**) for calculating the coefficients that represent the first and second channels together (**H1\*H2**) calculate the inverse transfer function coefficients ($\textbf{(H1\*H2)}^{-1}$) of the first and second channels together; and the means for predistorting (**11**), predistorts the signal to be sent with the inverse coefficients ($\textbf{H1}^{-1}$) of the convolution of the direct transfer function coefficients of the second channel and of the inverse transfer function coefficients of the first and second channels together.

<u>FIG 1</u>

<u>FIG 2</u>

## FIG 3

## FIG 4

## FIG 5

**11**

## FIG 6

**23**

## FIG 7

$$\frac{U1 \rightarrow U2 \rightarrow U1}{s(t)}$$ 50

$$\frac{U1}{(H1(t)*H2(t))^{-1}}$$ 51

$$\frac{U2 \rightarrow U1}{s'(t)}$$ 52

$$\frac{U1}{H2(t)}$$ 53

$$\frac{U1 \rightarrow U2}{((H1(t)*H2(t))^{-1}*H2(t))*S(t)}$$
$$= H1(t)^{-1}*S(t)$$ 54

## FIG 8

$$\frac{U2 \to U1}{s'(t)} \quad \diagup 60$$

$$\frac{U1}{H2(t)^{-1}} \quad \diagup 61$$

$$\frac{U1 \to U2 \to U1}{H2(t)^{-1}*s(t)} \quad \diagup 62$$

$$\diagup 63$$
$$\frac{U1}{H2(t)^{-1}*H1(t)*H2(t)*s(t)} = H1(t)* s(t)$$

$$\frac{U1}{H1(t)^{-1}} \quad \diagup 64$$

$$\frac{U1 \to U2}{H1(t)^{-1}*S(t)} \quad \diagup 65$$